# EUROPÄISCHE PATENTANMELDUNG

(11) **EP 1 584 909 A1**
(43) Veröffentlichungstag der Anmeldung: **12.10.2005**
(21) Anmeldenummer: 05005686.0
(22) Anmeldetag: 16.03.2005
(51) Int. Cl.: G01L 5/00

(54) **Vorrichtung und Verfahren zur Erfassung von Beanspruchungen eines Fahrzeugfahrwerks**

(30) Priorität: 30.03.2004 DE 102004015352
(71) Anmelder: MAN Nutzfahrzeuge Aktiengesellschaft, 80995 München (DE)
(72) Erfinder: Schaller, Karl-Viktor, Dr.-Ing., 82194 Gröbenzell (DE)

(57) **Zusammenfassung**

Beschrieben wird eine Vorrichtung sowie ein Verfahren zur Erfassung von Beanspruchungen eines Fahrzeugfahrwerks, bei dem an wenigstens einer Stelle des Fahrzeugfahrwerks und/oder eines am Fahrzeugfahrwerk vorgesehenen Anbauteils zumindest eine auf das Fahrzeugfahrwerk einwirkende Kraft, ein an dem Fahrzeugfahrwerk angreifendes Moment und/oder eine Lageänderung zumindest eines Elements des Fahrzeugfahrwerks detektiert und an eine zentrale Auswerteeinheit übermittelt wird.

Das beschriebene Verfahren zeichnet sich dadurch aus, dass wenigstens eine Änderung der Kraft, des Moments und/oder der Lageänderung innerhalb eines Zeitintervalls detektiert wird und mit der zentralen Auswerteeinheit unter Zugrundelegung der wenigstens einen Änderung zumindest ein Beanspruchungskennwert für das Fahrzeugfahrwerk ermittelt wird.

## Beschreibung

### Technisches Gebiet:

Die Erfindung betrifft eine Vorrichtung sowie ein Verfahren zur Erfassung von Beanspruchungen eines Fahrzeugfahrwerks, bei dem an wenigstens einer Stelle des Fahrzeugfahrwerks und/oder eines am Fahrzeugfahrwerk vorgesehenen Anbauteils zumindest eine auf das Fahrzeugfahrwerk einwirkende Kraft, ein an dem Fahrzeugfahrwerk angreifendes Moment und/oder eine Lageänderung zumindest eines Elements des Fahrzeugfahrwerks detektiert und an eine zentrale Auswerteeinheit übermittelt wird.

### Stand der Technik:

Sowohl für die Entwicklung neuer Fahrzeugkomponenten als auch für den sicheren und zuverlässigen Betrieb eines Fahrzeugs ist es von besonderer Bedeutung, genaue Kenntnisse über die, auf die verschiedenen Fahrzeugkomponenten einwirkenden Beanspruchungen zu erlangen. Aus diesem Grund werden heute oftmals Einsatzprofile des Antriebsstrangs und der Bremse in Fahrzeugen über entsprechende Sensorsysteme automatisch erfasst, die so gewonnenen Daten an den Fahrzeugführungsrechner übermittelt und schließlich Kennwerte generiert, die eine zuverlässige Aussage über den Zustand der Bremse und des Antriebsstrangs ermöglichen.

Neben der Kenntnis über die Beanspruchungen und dem damit verbundenen Betriebszustand der Bremse und des Antriebsstrangs ist es allerdings ebenfalls von Bedeutung, die auf das Fahrwerk eines Fahrzeugs einwirkenden Belastungen zu kennen. Zum Fahrwerk eines Kraftfahrzeugs gehören die Komponenten Rahmen, Federung, Radaufhängung, Lenkung, Bremsen sowie die Räder mit der Bereifung [Bohner M. et. al.; Fachkunde Kraftfahrzeugtechnik; Verlag Europa-Lehrmittel; 25. Aufl; 1994; S. 405]. Hierbei hat der Rahmen die Aufgabe, als stabiles Tragelement für die übrigen Fahrwerkskomponenten und vor allem für den Motor mit Getriebe zu dienen.

Oftmals wird auch die maximal auf das Fahrwerk bzw. auf die einzelnen Federn einwirkenden Belastungen erfasst und ausgewertet, um so etwa das lastabhängige Bremsventil eines Lastkraftwagens ansteuern oder die Luftfedern eines luftgefederten Fahrzeugs richtig einstellen zu können. Neben der Nutzung der auf diese Weise gewonnenen Daten für die vorgenannten Steuerungsaufgaben ist die Kenntnis des auf das Fahrwerk einwirkenden maximalen Belastung auf im Hinblick auf das zulässige Gesamtgewicht eines Fahrzeugs von Bedeutung.

In diesem Zusammenhang ist aus der DE 42 14 785 A1 ein Verfahren zur Überwachung des Gewichts bei Nutzfahrzeugen bekannt. Hierbei ist zwischen dem Federpaket und der Achse eines blattgefederten Fahrzeugs ein Kraftsensor vorgesehen, der die vom Wagenkasten auf die Wagenachse übertragenen Kräfte erfasst. Sofern es sich bei einem solchen Kraftsensor um einen 3-Komponenten Kraftaufnehmer handelt ist auch eine Berechnung der Gesamtlast und der einzelnen Achslasten unabhängig von der Neigung des Untergrundes möglich. Eine Auswerteelektronik empfängt die Kraftmeßsignale der in jeweils einer Radaufhängung eingebrachten Kraftsensoren, mittelt deren Werte, um Einschwingvorgänge, wie sie beim Beladen eines Fahrzeugs typischerweise auftreten, zu kompensieren. Weiterhin wird in dieser Druckschrift vorgeschlagen, dynamische Kraftanteile in den Meßsignalen auszufiltern, um so die tatsächliche Gesamtlast und die einzelnen Achslasten zu jedem Zeitpunkt ermitteln zu können. Bei Überschreiten des zulässigen Gesamtgewichts oder eines einstellbaren Grenzwertes erfolgt die Ausgabe eines entsprechenden Warnsignals.

Weiterhin ist aus der DE 100 50 717 A1 ein System zur variablen Laststeuerung einer Fahrzeugaufhängung bekannt. Es sind eine Vielzahl von Sensorelementen vorgesehen, mit denen bspw. Lenkwinkel, Fahrgeschwindigkeit, Hub der Räder relativ zum Fahrzeugrahmen und die auf den Rahmen des Fahrzeugs wirkende vertikale Beschleunigung erfasst werden. Die Sensoren sind mit einem elektronischen Steuergerät verbunden, das die Meßsignale empfängt und entsprechende elektrische Steuersignale zur Veränderung der Steifigkeit der Aufhängung erzeugt. Auf diese Weise ist es möglich, die Steifigkeit bestimmter Elemente des Fahrwerks, wie etwa Achsen, Federn und Dämpfer, an den Zustand der Straße anzupassen.

Nachteilig an den bekannten Systemen ist, dass es mit ihnen nicht möglich ist, Aussagen über die Beanspruchung des Fahrwerks bzw. bestimmter Fahrwerkselemente zu erhalten. Die Kenntnis derartiger Beanspruchungen ist allerdings sowohl für die Auslegung von Fahrwerkskomponenten als auch für die genaue Bestimmung des Betriebszustands dieser Komponenten, von besonderer Bedeutung.

Ausgehend von dem bekannten Stand der Technik liegt der Erfindung daher die Aufgabe zu Grunde, ein Verfahren sowie eine Vorrichtung zur Durchführung des Verfahrens anzugeben, mit dem auf möglichst einfache Weise und insbesondere ohne erheblichen anlagentechnischen Aufwand, Beanspruchungen des Fahrwerks bzw. der einzelnen Fahrwerkskomponenten bei verschiedenen Fahrzuständen feststellbar sind. In diesem Zusammenhang soll es auch möglich sein, Erkenntnisse über die Verteilung der auf das Fahrwerk einwirkenden Beanspruchung zu erhalten.

Erfindungsgemäß wird die vorgenannte Aufgabe mit einem Verfahren zur Erfassung von Beanspruchungen eines Fahrzeugfahrwerks gelöst, bei dem an wenigstens einer Stelle des Fahrzeugfahrwerks und/oder eines am Fahrzeugfahrwerk vorgesehenen Anbauteils zumindest eine auf das Fahrzeugfahrwerk einwirkende Kraft, ein an dem Fahrzeugfahrwerk angreifendes Moment und/oder eine Lageänderung zumindest eines Elements des Fahrzeugfahrwerks detektiert und an eine zentrale Auswerteeinheit übermittelt wird, das sich dadurch auszeichnet dass, wenigstens eine Änderung der Kraft, des Moments und/oder der Lageänderung innerhalb eines Zeitintervalls detektiert wird und mit der zentralen Auswerteeinheit unter Zugrundelegung der wenigstens einen Änderung zumindest ein Beanspruchungskennwert für das Fahrzeugfahrwerk ermittelt wird.

Mit dem vorbeschriebenen Verfahren wird ein Beanspruchungskennwert für ein Fahrzeugfahrwerk und/oder für einzelne Komponenten des Fahrzeugfahrwerks generiert, der vorzugsweise sowohl Informationen über die Art als auch über die Stärke der Fahrzeugfahrwerksbeanspruchung enthält. Hierbei werden bei der Messung nicht nur maximal auftretende Belastungen, wie bspw. eine maximal auftretende Gewichtsbelastung, erfasst sondern auch dynamische Veränderungen der Belastungen detektiert. Die Kenntnis dieser Meßgrößen ist von Bedeutung, da sich die auf ein Fahrwerk einwirkenden Kräfte und Momente, etwa bei einer Geländefahrt, ständig verändern. Diese ständige Veränderung der angreifenden Kräfte und Momente hat letztendlich auch zur Folge, dass sich nicht nur die maximal auf ein Fahrzeugfahrwerk einwirkenden Kräfte und/oder Momente, sondern auch deren Verteilung über das Fahrwerk ändert. Dies bedeutet insbesondere, dass sich die Verteilung der an einem Rahmen angreifenden Kräfte und/oder Momente sowie die Beanspruchung der einzelnen Fahrzeugfahrwerkskomponenten während der Fahrt ständig ändert. Diese ständige Änderung der Beanspruchung eines Fahrzeugfahrwerks ist sowohl auf eine sich ständig ändernde Beschaffenheit der Fahrbahnoberfläche sowie eine Änderung der Fahrsituation, vor allem der Fahrzeuggeschwindigkeit, zurückzuführen.

In einer besonderen Ausführungsform des erfindungsgemäßen Verfahrens wird eine Bewegung einer Achse relativ zum Fahrzeugrahmen erfasst. Vor allem bei luftgefederten Fahrzeugen wird hierzu vorzugsweise der an der Hinterachse vorgesehene Luftfeder-Wegsensor verwendet, mit dem die Bewegung der Luftfeder und somit auch der Hinterachse detektiert wird. Bei so genannten vollluftgefederten Fahrzeugen, die also sowohl an der Vorderachse als auch an der Hinterachse Luftfedern aufweisen, ist es selbstverständlich auch denkbar, die an der Vorderachse vorgesehenen Luftfeder-Wegsensoren für eine entsprechende Messung zu verwenden.

Neben dem vorbeschriebenen Luftfeder-Wegsensor sind auch weitere Sensoren, die vorzugsweise bereits für andere Fahrwerksregelungssysteme eingesetzt werden, zur Meßdatenerfassung für das erfindungsgemäße Verfahren geeignet. Hierbei können diese weiteren Sensoren sowohl gemeinsam mit dem Luftfeder-Wegsensor als auch alternativ eingesetzt werden.

Eine weitere besonders bevorzugte Ausführungsform sieht die Erfassung von Messdaten mit den bereits für ein Fahrwerksstabilitätssystem benötigten Sensoren vor. Vorzugsweise werden die für die Ausführung des ESP (Electronic Stability Program) benötigten Sensoren zur Meßdatenerfassung für das erfindungsgemäße Verfahren eingesetzt. Besonders eignet sich in diesem Zusammenhang die Verwendung eines Gierraten- und/oder eines Querbeschleunigungssensors, mit dem vor allem die quer zur Fahrzeuglängsachse wirkenden Kräfte und/oder Momente bzw. die auf Grund der vorgenannten Kräfte und/oder Momente ausgelösten Fahrwerksbewegungen erfasst werden.

Selbstverständlich ist eine mögliche Verwendung von Beschleunigungssensoren nicht auf die Erfassung von Querbeschleunigungen beschränkt. Vielmehr ist es ebenfalls denkbar, die in Normalenrichtung und/oder in anderen Richtungen wirkenden Kräfte und/oder Momente bzw. deren Auswirkungen auf die Verformung oder Bewegung des Fahrwerks mit Hilfe entsprechender Beschleunigungssensoren zu erfassen. Wesentlich ist hierbei, dass die innerhalb eines Zeitintervalls auftretende Veränderung einer gemessenen Kraft, eines Moments und/oder einer Lageänderung, also letztendlich die Ableitung einer Meßgröße nach der Zeit, ermittelt wird.

Eine weitere spezielle Ausführungsform des erfindungsgemäßen Verfahrens sieht die Verwendung von Schwingungssensoren vor, mit denen Schwingungen des Fahrwerks bzw. einzelner Komponenten des Fahrwerks, die aufgrund einer auf das Fahrwerk einwirkenden Beanspruchung auftreten, ermittelt werden. Vorzugsweise werden hierbei die Schwingungen einzelner Fahrwerkskomponenten, beispielsweise an einem Vierpunktlenker und/oder einem Schwingungsdämpfer (Stoßdämpfer), getrennt ermittelt und an die Auswerteeinheit übertragen. In diesem Zusammenhang ist es auch denkbar, dass die zu einem Zeitpunkt ermittelte Änderung einer Kraft, eines Moments, einer Lageänderung wenigstens einer Fahrwerkskomponente und/oder die von einem Beschleunigungssensor ermittelten Messdaten gemeinsam mit den Schwindungsdaten, quasi als Wertepaare, in der Auswerteeinheit verarbeitet werden. Auf diese Weise ist es möglich eine Klassifizierung der einzelnen Fahrwerkskomponenten bzgl. der bei einer Beanspruchung des Fahrwerks auftretenden Schwingungen vorzunehmen.

Mit dem vorbeschriebenen Verfahren zur gemeinsamen Detektion von Messdaten, die auf einer Beanspruchung des Fahrwerks beruhen, und auftretenden Schwingungen ist es auf besonders bevorzugte Weise möglich, die Anzahl der bei einer Messdatenauswertung berücksichtigten Daten zu reduzieren. Ausgehend von der Erkenntnis, dass Schwingungen der Fahrwerkskomponenten, die eine Frequenz oberhalb einer relevanten Grenzfrequenz aufweisen, für das Fahrwerk von untergeordneter Bedeutung sind, werden Meßdaten, die bei Auftreten einer Frequenz oberhalb der relevanten Grenzfrequenz ermittelt werden, entweder nicht an die Auswerteeinheit übermittelt oder werden in der Auswerteeinheit nicht verarbeitet. Selbstverständlich ist es auch denkbar, die nicht relevanten Daten in einem solchen Fall zu löschen.

Vorzugsweise erfolgt die Erfassung von Schwingungen an einem Vierpunktlenker und/oder an wenigstens einem Schwingungsdämpfer. Treten an einem Vierpunktlenker Schwingungen mit einer Frequenz oberhalb von beispielsweise 20 Hz, bzw. bei einem Schwingungsdämpfer (Stoßdämpfer) oberhalb von beispielsweise 50 Hz auf, so sind die Belastungen der Fahrwerkskomponenten, die bei diesen Schwingungen auftreten zu vernachlässigen. Daher sieht eine ganz besonders geeignete Ausführungsform des erfindungsgemäßen Verfahrens vor, dass die am Vierpunktlenker und/oder an zumindest einem Schwingungsdämpfer (Stoßdämpfer) auftretenden Schwingungen detektiert und gemeinsam mit den übrigen, beanspruchungsrelevanten Meßaten an die Auswerteeinheit übertragen werden. Sobald die am Vierpunktlenker oder dem Schwingungsdämpfer erfassten Schwingungen eine Frequenz aufweisen, die oberhalb der vorgenannten, relevanten Grenzfrequenzen für diese Fahrwerkskomponenten liegen, so werden bspw. die gleichzeitig aufgenommenen Beschleunigungsdaten nicht zur Ermittlung eines entsprechenden Beanspruchungskennwertes herangezogen.

Die Übertragung der für die Ermittlung des Beanspruchungskennwertes relevanten Daten an die zentrale Auswerteeinheit kann sowohl über eine Datenleitung, insbesondere ein BUSSystem, als auch mit Hilfe einer Funkdatenübertragung erfolgen. Hierbei ist die zentrale Auswerteeinheit vorzugsweise in einen Fahrzeugführungsrechner integriert. Es ist allerdings auch denkbar, dass die zentrale Auswerteeinheit in eine externe Einheit zur Datenauswertung, bspw. in ein Notebook, das im Bedarfsfall an das System zur Meßdatenerfassung angeschlossen wird, integriert ist.

In der zentralen Auswerteeinheit wird unter Zugrundelegung der wenigstens einen Änderung einer Kraft, eines Moments und/oder einer Lageänderung wenigstens einer Fahrwerkskomponente zumindest ein Beanspruchungskennwert für das Fahrzeugfahrwerk ermittelt. Vorzugsweise werden bei der Ermittlung des Beanspruchungskennwerts die erfassten Messdaten vektoriell verarbeitet und in Form einer Matrize in einer Datenspeichereinheit abgelegt. Vorzugsweise werden die Beanspruchungskennwerte im Fahrzeugführungsrechner abgelegt, so dass sie einer weiteren Datenverarbeitung zur Verfügung stehen.

In einer weiteren besonderen Ausführungsform des erfindungsgemäßen Verfahrens wird wenigstens ein von der zentralen Auswerteeinheit ermittelter Beanspruchungskennwert an eine Ausgabeeinheit übertragen. Bei einer derartigen Ausgabeeinheit handelt es sich entweder um eine Einheit, mit der der Beanspruchungskennwert aus dem System ausgelesen werden kann, bspw. ein Disketten oder CD-ROM-Laufwerk, oder um einen Monitor. Vorzugsweise wird als Monitor in diesem Zusammenhang ein von dem Fahrzeugführer einsehbares Display verwendet.

Eine weitere Ausführungsform sieht vor, dass in den Fahrzeugführungsrechner Beanspruchungsgrenzwerte eingebbar sind, die nach der Ermittlung des Beanspruchungskennwertes in der zentralen Auswerteeinheit mit diesem Kennwert verglichen werden. Überschreitet der Beanspruchungskennwert den vorgegebenen Grenzwert ist es denkbar, dass über die Ausgabeeinheit ein Warnsignal ausgegeben wird. Ebenso ist es denkbar, dass der Beanspruchungskennwert und/oder das Warnsignal in einer Datenspeicherungseinheit abgelegt und auf diese Weise einem späteren Datenzugriff zur Verfügung steht. Darüber hinaus könnte zusätzlich oder alternativ zu der visuellen Ausgabe ein akustisch oder haptisch wahrnehmbares Signal generiert werden.

In einer speziellen Weiterbildung des erfindungsgemäßen Verfahrens ist außerdem vorgesehen, dass die vorbeschriebene Grenzwertüberschreitung über eine Funkdatenleitung an eine externe Datenüberwachung übertragen wird.

Zur Durchführung des erfindungsgemäßen Verfahrens ist eine Vorrichtung vorgesehen, die über wenigstens einen Sensor verfügt, mit dem an einer Stelle des Fahrzeugfahrwerks und/oder eines am Fahrzeugfahrwerk vorgesehenen Anbauteils zumindest eine auf das Fahrzeugfahrwerk einwirkende Kraft, ein an dem Fahrzeugfahrwerk angreifendes Moment und/oder eine Lageänderung zumindest eines Elements des Fahrzeugfahrwerks detektierbar ist. Ferner ist eine Datenstrecke, insbesondere eine Datenleitung vorgesehen, über die die detektierte Kraft, das Moment und/oder die Lageänderung repräsentierende Daten an eine zentrale Auswerteeinheit übermittelbar sind. Die erfindungsgemäße Vorrichtung zeichnet sich zum einen dadurch aus, dass die Sensoren derart ausgeführt sind, dass wenigstens eine Änderung der Kraft, des Moments und/oder der Lageänderung innerhalb eines Zeitintervalls detektierbar ist und zum anderen mit der zentralen Auswerteeinheit unter Zugrundelegung der wenigstens einen Änderung zumindest ein Beanspruchungskennwert für das Fahrzeugfahrwerk ermittelbar ist.

Vorzugsweise werden das erfindungsgemäße Verfahren sowie die zur Durchführung des Verfahrens vorgesehene Vorrichtung in einem Nutzfahrzeug eingesetzt. Ganz besonders eignet sich das vorgeschlagene Verfahren bzw. die Vorrichtung für so genannte schwere Lkw mit einem zulässigen Gesamtgewicht von mehr als 7500 kg. Bei den vorgenannten schweren Lkw ist das erfindungsgemäße Verfahren bzw. die Vorrichtung wiederum vorzugsweise für den Einsatz in Tank- und/oder Silofahrzeugen geeignet. Selbstverständlich liefert das vorgeschlagene Verfahren aber auch etwa während des Betriebs eines Baustellenfahrzeugs wichtige Daten über die Beanspruchung bzw. die Verteilung der Beanspruchung bei einem Fahrzeugfahrwerk.

## Patentansprüche

1. Verfahren zur Erfassung von Beanspruchungen eines Fahrzeugfahrwerks, bei dem an wenigstens einer Stelle des Fahrzeugfahrwerks und/oder eines am Fahrzeugfahrwerk vorgesehenen Anbauteils zumindest eine auf das Fahrzeugfahrwerk einwirkende Kraft, ein an dem Fahrzeugfahrwerk angreifendes Moment und/oder eine Lageänderung zumindest eines Elements des Fahrzeugfahrwerks detektiert und an eine zentrale Auswerteeinheit übermittelt wird, **dadurch gekennzeichnet, dass** wenigstens eine Änderung der Kraft, des Moments und/oder der Lageänderung innerhalb eines Zeitintervalls detektiert wird und mit der zentralen Auswerteeinheit unter Zugrundelegung der wenigstens einen Änderung zumindest ein Beanspruchungskennwert für das Fahrzeugfahrwerk ermittelt wird.

2. Verfahren nach Anspruch 1, **dadurch gekennzeichnet, dass** wenigstens eine Beschleunigung einer Bewegung des Fahrzeugfahrwerks und/oder eines am Fahrzeugfahrwerk vorgesehenen Anbauteils detektiert wird.

3. Verfahren nach Anspruch 1 oder 2, **dadurch gekennzeichnet, dass** als Lageänderung zumindest eines Elements des Fahrzeugfahrwerks wenigstens eine Bewegung einer Hinterachse relativ zum Fahrzeugrahmen erfasst wird.

4. Verfahren nach einem der Ansprüche 1 bis 3, **dadurch gekennzeichnet, dass** der Beanspruchungskennwert in der zentralen Auswerteeinheit mit einem vorgebbaren Beanspruchungsgrenzwert verglichen und bei Überschreiten des Beanspruchungsgrenzwertes ein Warnsignal generiert wird.

5. Verfahren nach einem der Ansprüche 1 bis 4, **dadurch gekennzeichnet, dass** der Beanspruchungskennwert und/oder das Warnsignal an eine Ausgabeeinheit übertragen wird.

6. Vorrichtung zur Erfassung von Beanspruchungen eines Fahrzeugfahrwerks, die über wenigstens einen Sensor verfügt, mit dem an einer Stelle des Fahrzeugfahrwerks und/oder eines am Fahrzeugfahrwerk vorgesehenen Anbauteils zumindest eine auf das Fahrzeugfahrwerk einwirkende Kraft, ein an dem Fahrzeugfahrwerk angreifendes Moment und/oder eine Lageänderung zumindest eines Elements des Fahrzeugfahrwerks detektierbar ist und die eine Datenstrecke aufweist, über die die detektierte Kraft, das Moment und/oder die Lageänderung repräsentierende Daten an eine zentrale Auswerteeinheit übermittelbar sind, **dadurch gekennzeichnet, dass** zum einen der wenigstens eine Sensor derart ausgeführt ist, dass wenigstens eine Änderung der Kraft, des Moments und/oder der Lageänderung innerhalb eines Zeitintervalls detektierbar ist und zum anderen, dass mit der zentralen Auswerteeinheit unter Zugrundelegung der wenigstens einen Änderung zumindest ein Beanspruchungskennwert für das Fahrzeugfahrwerk ermittelbar ist.
